(19) Europäisches Patentamt
European Patent Office
Office européen des brevets

(11) **EP 4 164 303 B1**

(12) **EUROPEAN PATENT SPECIFICATION**

(45) Date of publication and mention
of the grant of the patent:
**23.07.2025 Bulletin 2025/30**

(21) Application number: **21817564.4**

(22) Date of filing: **11.03.2021**

(51) International Patent Classification (IPC):
*H04W 52/34* (2009.01)    *H04W 72/04* (2023.01)
*H04W 52/28* (2009.01)    *H04W 72/044* (2023.01)
*H04W 72/56* (2023.01)    *H04W 24/06* (2009.01)
*H04B 17/00* (2015.01)    *H04W 52/36* (2009.01)
*H04W 52/14* (2009.01)

(52) Cooperative Patent Classification (CPC):
**H04W 52/346; H04B 17/0085; H04W 52/281;**
H04W 24/06; H04W 52/146; H04W 52/367

(86) International application number:
**PCT/CN2021/080242**

(87) International publication number:
**WO 2021/244095 (09.12.2021 Gazette 2021/49)**

(54) **POWER ALLOCATION METHOD, DEVICE, AND STORAGE MEDIUM**

LEISTUNGSZUWEISUNGSVERFAHREN, VORRICHTUNG UND SPEICHERMEDIUM

PROCÉDÉ D'ATTRIBUTION DE PUISSANCE, DISPOSITIF ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.06.2020 CN 202010505554**

(43) Date of publication of application:
**12.04.2023 Bulletin 2023/15**

(73) Proprietor: **ZTE Corporation
Shenzhen, Guangdong 518057 (CN)**

(72) Inventors:
• **SUN, Xiaoqing
Shenzhen, Guangdong 518057 (CN)**
• **WANG, Jingmei
Shenzhen, Guangdong 518057 (CN)**

(74) Representative: **Osterhoff, Utz
Bockermann Ksoll
Griepenstroh Osterhoff
Patentanwälte
Bergstraße 159
44791 Bochum (DE)**

(56) References cited:
WO-A1-2009/091304    WO-A2-2006/121693
CN-A- 106 851 808    CN-A- 107 682 923
CN-A- 108 541 059    CN-A- 108 541 059
CN-A- 109 803 362    US-A1- 2019 174 432
US-B2- 10 117 193

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

Embodiments of the present application relate to the technical field of communications, and in particular to a power allocation method, a device and a storage medium.

### BACKGROUND

At present, when simulating a plurality of user equipments (UE) to conduct performance tests with the base station, the single device has been able to finish connection tests between a single UE and the base station and between the plurality of UEs and the base station. When a single device simulates a plurality of UEs to connect to the base station simultaneously, the time-frequency resources of one time slot will be shared by the plurality of UEs, which will inevitably lead to the problem that power is shared among the plurality of UEs. Currently, there are mainly two methods for the plurality of UEs sharing uplink power: 1) the plurality of UEs transmit uplink data with maximum power by time division; 2) the maximum power is allocated equally among each UE. The first method will lead to waste of uplink resources and will reduce system performance, and the second method only considers the number of UEs as a criterion, which does not meet service requirements.

D1 (CN108541059A) discloses a power control method and a device, which relate to the field of mobile communication technology. The method includes: calculating, by a user equipment, a first transmission power value P1 according to a power control parameter sent by a base station; receiving, by the user equipment, a second transmission power value P2 and a third transmission power value P3 sent by a central processing element, and determining, by the user equipment, a final transmission power according to the P1, P2, and P3; or receiving, by the user equipment, a fourth power value P4 sent by the central processing element, and determining, by the user equipment, the final transmission power according to the P1 and P4.

D2 (US10117193B2) discloses a methods for adjusting the transmission power utilized by a mobile terminal for uplink transmissions, and in particular to a method for adjusting the transmission power used by a mobile terminal for one or more RACH procedures. The invention is also providing apparatus and system for performing these methods, and computer readable media the instructions of which cause the apparatus and system to perform the methods described herein. In order to allow for adjusting the transmit power of uplink transmissions on uplink component carriers, the invention suggests introducing a power scaling for uplink PRACH transmissions performing RACH procedures on an uplink component carrier. The power scaling is proposed on the basis of a prioritization among multiple uplink transmissions or on the basis of the uplink component carriers on which RACH procedures are performed.

### SUMMARY

The purpose of the embodiments in the present application is to provide a power allocation method, a device and a storage medium. When a single device simulates a plurality of UEs, based on the transmission power of each UE in each channel, under the premise that the sum of the transmission power of a plurality of UEs does not exceed the maximum transmission power, the priority of each UE in different channels is used as a consideration standard when the transmission power is allocated for each UE, making the transmission power which is allocated to each UE more meet the service requirements of each UE.

In order to solve the above technical problems, embodiments of the present application provide a power allocation method, according to claim 1.

Embodiments of the present application further provide a communication device, according to claim 8.

Embodiments of the present application further provide a computer-readable storage medium according to claim 9.

### BRIEF DESCRIPTION OF THE DRAWINGS

One or more embodiments are exemplified by pictures in the accompanying drawings, and these exemplifications are not intended to limit the embodiments.

FIG. 1 is a flowchart of a power allocation method according to a first embodiment of the present application.

FIG. 2 is a schematic diagram of a single electronic device simulating a plurality of UEs to communicate with a base station according to the first embodiment of the present application.

FIG. 3 is a flowchart of an operation 120 in the power allocation method according to a second embodiment of the present application

FIG. 4 is a schematic diagram of a communication device according to the second embodiment of the present application.

FIG. 5 is a structural block diagram of the communication device according to a third embodiment of the present application.

**DETAILED DESCRIPTION OF THE EMBODIMENTS**

In order to make the objectives, technical solutions and advantages of the embodiments of the present application clearer, each embodiment of the present application will be described in detail below with reference to the accompanying drawings. However, those of ordinary skill in the art can understand that, in each embodiment of the present application, many technical details are provided for the reader to better understand the present application. However, even without these technical details and various changes and modifications based on the following embodiments, the technical solutions claimed in the present application can be realized. The following divisions of the various embodiments are for the convenience of description, and should not constitute any limitation on the specific implementation of the present application, and the various embodiments may be combined with each other and referred to each other on the premise of not contradicting each other.

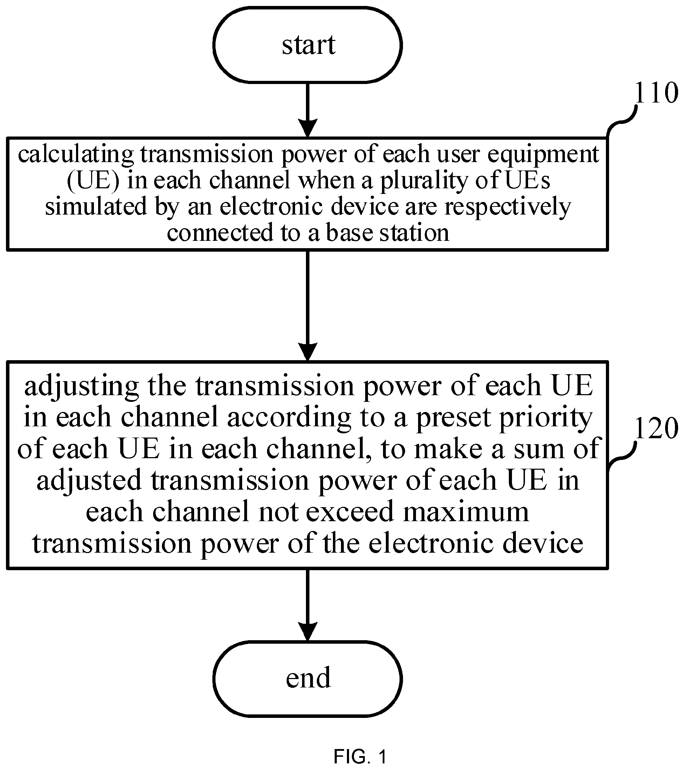

A first embodiment of the present application relates to a power allocation method, applied to a communication device. As shown in FIG. 1, the power allocation method includes the following operations.

Operation 110, calculating transmission power of each user equipment (UE) in each channel when a plurality of UEs simulated by an electronic device are respectively connected to a base station.

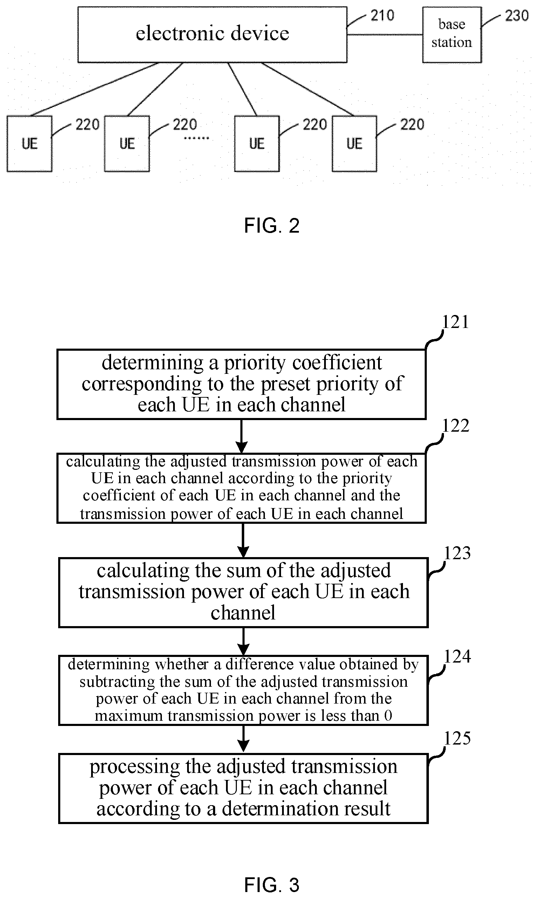

As shown in FIG. 2, a single electronic device 210 simulates a plurality of UEs 220 to communicate with a base station 230. Based on a method for controlling power when a single UE is connected to the base station, the communication device may calculate the transmission power of the UE in each channel.

When a single UE is connected to the base station, the method for controlling power is determined by following factors: the cell nominal power, the UE nominal power, the downlink path loss of the UE in the channel, the power offset based on a modulation and coding scheme (MCS), and a closed loop power control amount. In this way, the communication device may calculate the transmission power of the UE in each channel based on the above factors. The communication device may obtain a cell nominal power, a UE nominal power, a downlink path loss of the UE in the channel, a power offset based on the MCS, and a closed loop power control amount. Further, the communication device may calculate the transmission power of the UE in the channel based on the cell nominal power, the UE nominal power, the downlink path loss (PL) of the UE in the channel, the power offset based on the MCS, the closed loop power control amount, and an uplink power control formula of the channel.

Taking the method for controlling power in the physical uplink shared channel (PUSCH) as an example, the uplink power control formula is as follows.

$$P_{PUSCH}(i) = \min\{P_{CMAX,} 10\log_{10}(M_{PUSCH}(i)) + P_{O\_PUSCH}(j) + \alpha(j) \cdot PL + \Delta_{TF}(i) + f(i)\}$$

$P_{CMAX}$ is the maximum transmission power of the UE. $M_{PUSCH}(i)$ is the number of resource blocks. $P_{O\_PUSCH}(j) + \alpha(j) \cdot PL$ is the open loop part, and includes the cell nominal power and the UE nominal power. $\alpha(j)$ is the path loss compensation coefficient. PL is the path loss. $\Delta_{TF}(i)$ is the power offset based on the MCS, that is, the MCS compensation factor. $f(i)$ is the closed loop power control amount.

From the above formula, it can be seen that when the communication device controls and calculates the transmission power of the PUSCH, the downlink path loss and the closed loop power control between the UE and the base station are fully considered, which enables the communication device to adjust shared power dynamically based on the downlink path loss and the closed loop power control between the UE and the base station.

Similarly, as for other channels of the UE, the communication device may also dynamically adjust the transmission power of the channel based on the power control formula of each channel, which will not be repeated herein.

It should be noted that those skilled in the art can understand that in practical applications, based on other principles, the communication device may also calculate the initial allocated transmission power of a plurality of UEs in each channel, and this embodiment is only for illustration.

Operation 120, adjusting the transmission power of each UE in each channel according to a preset priority of each UE in each channel, to make a sum of adjusted transmission power of each UE in each channel not exceed maximum transmission power of the electronic device.

In operation 110, based on the connection between a single UE and the base station, the calculated sum of the transmission power of each channel may exceed the maximum transmission power. In this embodiment, based on the priority of each channel, the transmission power of each UE in each channel is adjusted to ensure that the sum of the adjusted transmission power of each UE in each channel does not exceed the maximum transmission power.

It should be noted that those skilled in the art can understand that the priority of each UE in each channel can be set based on various principles. For example, the priority of each UE in each channel may be set based on the determination criterion that the normal access of each UE is ensured to the greatest extent.

In the following, for illustrating the priority of each channel, the priority of each UE in each channel is set based on the determination criterion that the normal access of each UE is ensured to the greatest extent.

When the determination criterion is to ensure the normal access of each UE to the greatest extent, if the electronic device simulates a plurality of UEs to conduct performance tests with the base station, different UEs may transmit other channel data. In addition, to ensure the access stability, the priority of the physical random access channel (PRACH) is set to the highest. In the case that the channels of the UE include the PRACH, the sounding reference signal (SRS) channel, the PUSCH, and the physical uplink control channel (PUCCH), a priority a of the PRACH, a priority b of the PUSCH, a priority c of the PUCCH, and a priority d of the SRS channel meet a following condition: a>b>c>d. Each channel may work in different states, and when the state of the channel changes, the priority of each channel may be different. For example, in the case that the pre-scheduling triggers message5 (Msg5), the priority ordering of each channel can be: the priority of the PRACH $\geq$ the priority of the PUSCH (transmission of the MSG3) $\geq$ the priority of the PUSCH (in the normal operation state) $\geq$ the PUCCH $\geq$ the SRS channel. For another example, when a scheduling request (SR) triggers Msg5, the priority ordering of each channel may be: the priority of the random access channel (RACH) $\geq$ the priority of the PUSCH (transmission of the MSG3) $\geq$ the PUCCH of the reuse SR $\geq$ the priority of the PUSCH (in the normal operation state) $\geq$ the PUCCH $\geq$ the SRS channel.

It should be noted that, those skilled in the art can understand that in practical applications, the priority of each channel can be adjusted according to service requirements, and this embodiment is only for illustration.

In an embodiment, to avoid allocating transmission power for UEs that have been down, the communication device can determine that each UE simulated by the electronic device is in the normal operation state before the calculating transmission power of each UE in each channel when a plurality of UEs simulated by the electronic device are respectively connected to a base station. If a certain UE fails to operate normally, an alarm can be issued to remind the tester that the power can be allocated after the UE returns to the normal operation state, and power can also be allocated for other UEs except the abnormal UE, which is not limited herein.

This embodiment provides a power allocation method. When a single device simulates a plurality of UEs, based on the transmission power of each UE in each channel when each UE is connected to the base station, the transmission power of each UE in the channel is adjusted according to the priorities of each UE in different channels. In this way, not only the sum of the transmission power of a plurality of UEs may not exceed the maximum transmission power, and the transmission power allocated to each UE in each channel more meets the service requirements of each UE in each channel, but also the sum of the transmission power of the plurality of UEs does not exceed the maximum transmission power that the electronic device can bear. In addition, when calculating the transmission power of each UE in each channel, the transmission power of each UE in each channel can be calculated based on the power control formula of the UE in each channel when a single UE is connected to the base station. Thus, the transmission power of each UE in each channel can be adjusted dynamically based on the path loss of each UE and the closed loop control between the UE and the base station.

The second embodiment of the present application relates to the power allocation method, and the second embodiment is substantially the same as the first embodiment. In this embodiment, examples are given to illustrate the implementation process of operation 120 in the first embodiment.

In this embodiment, by setting different priority coefficients for each UE in each channel, the priority of each UE in each channel can be distinguished by the communication device. To make the transmission power of each UE less than or equal to or far less than the transmission power of a single UE, the communication device can continuously reduce the priority coefficients of each UE in each channel until the communication device finds a mximum transmission power that meets the requirements and each channel of each UE can bear.

Taking the PRACH as an example, assuming that in the current SLOT, m UEs uses the PRACH , then the transmission power of the PRACH is:

$$P_{PRACH,SUM}(i) = \alpha_1 P_{PUACH,UE1}(i) + \alpha_2 P_{PUACH,UE2}(i) + \cdots + \alpha_m P_{PUACH,UEm}(i)$$

$$= \sum_{j=0}^{m} \alpha_j P_{PUACH,UEj}(i)$$

$P_{PRACH,SUM}(i)$ is the total transmission power of the PRACH. $\alpha_j$ is the priority coefficient of the UEj of the PRACH (also known as the proportion of the transmission power of the UEj of the PRACH in the total power). $P_{PUACH,UEj}(i)$ is the transmission power of the UEj in the PRACH obtained through the power control calculation when the UEj is connected to the base station alone.

By analogy, for the current SLOT, when different UEs are in different channels, the total transmission power on a single symbol is:

$$P_{SUM}(i) = P_{PRACH,SUM}(i) + P_{Msg3,SUM}(i) + P_{PUSCH,SUM}(i) + P_{PUCCH,SUM}(i) + P_{SRS,SUM}(i)$$

$$= \sum_{j=1}^{m} \alpha_j P_{PRACH,UEj}(i)$$

$$+ \sum_{r=1}^{n} \beta_r P_{Msg3,UEr}(i) + \sum_{s=1}^{o} \gamma_s P_{PUSCH,UEs}(i) + \sum_{t=1}^{p} \eta_t P_{PUCCH,UEt}(i)$$

$$+ \sum_{u=0}^{q} \varepsilon_u P_{SRS,UEu}(i)$$

$P_{SUM}(i)$ is the total transmission power. $P_{PRACH,SUM}(i)$ is the total transmission power of the PRACH. $P_{Msg3,SUM}(i)$ is the total transmission power of the Msg channel. $P_{PUSCH,SUM}(i)$ is the total transmission power of the PUSCH. $P_{PUCCH,SUM}(i)$ is the total transmission power of the PUCCH. $P_{SRS,SUM}(i)$ is the total transmission power of the SRS channel. The m, n, o, p, and q are the number of UEs in different channels. $\alpha_j$ is the priority coefficient of the j-th UE in the PRACH. $\beta_r$ is the priority coefficient of the r-th UE in the PUSCH (transmission of the MSG3). $\gamma_s$ is the priority coefficient of s-th UE in the PUSCH (in the normal operation state). $\eta_t$ is the priority coefficient of the t-th UE in the PUCCH. $\varepsilon_u$ is the priority coefficient of the u-th UE in the SRS channel. $P_{PRACH,UEj}(i)$ is the transmission power of the PRACH obtained through the power control calculation when the j-th UE is connected to the base station alone. $P_{Msg3,UEr}(i)$ is the transmission power of the PUSCH (transmission of the MSG3) obtained through the power control calculation when the r-th UE is connected to the base station alone. $P_{PUSCH,UEs}(i)$ is the transmission power of the PUSCH (in the normal operation state) obtained through the power control calculation when the s-th UE is connected to the base station alone. $P_{PUCCH,UEt}(i)$ is the transmission power of the PUCCH obtained through the power control calculation when the t-th UE is connected to the base station alone. $P_{SRS,UEu}(i)$ is the transmission power of the SRS channel obtained through the power control calculation when the u-th UE is connected to the base station alone. The total power of a plurality of UEs on a single symbol does not exceed the maximum transmission power, and the transmission power of each UE is less than or equal to or far less than the transmission power that is calculated based on the connection between a single UE and the base station. Therefore, in this embodiment, by continuously reducing the transmission power of each channel, the communication device can find the mximum transmission power that meets the requirements and each channel of each UE can bear. Based on the above idea, as shown in FIG. 3, operation 120 may include the following sub-operations.

Operation 121, determining a priority coefficient corresponding to the preset priority of each UE in each channel.

The communication device sets different priority coefficients for each channel based on the priority orders of each channel. Taking the example of the priority of the PRACH ≥ the priority of the PUSCH (transmission of the MSG3) ≥ the priority of the PUSCH (in the normal operation state) ≥ the PUCCH ≥ the SRS channel for illustration, the priority coefficient of each UE in each channel meets the following condition: $1 > \alpha_j > \beta_r > \gamma_s > \eta_t > \varepsilon_u$.

Operation 122, calculating the adjusted transmission power of each UE in each channel according to the priority coefficient of each UE in each channel and the transmission power of each UE in each channel.

The transmission power of each UE in each channel, which is calculated based on the connection between a single UE and the base station, may be reduced by the communication device reduces according to the priority of each UE in each channel.

In an embodiment, to ensure that the information of each channel can be parsed normally, when the communication device reduces the transmission power of each UE in each channel, which is calculated based on the connection between a single UE and the base station, relevant determination operations can be increased, so that the adjusted transmission power of each UE in each channel is not less than the minimum power of each channel obtained in the actual joint debugging process. After performing operation 122 and before performing operation 123, the communication device executes the following operations for each channel of each UE:

determining whether the adjusted transmission power of the UE in the channel is less than a minimum power of the UE in the channel;

if the adjusted transmission power of the UE in the channel is less than the minimum power of the UE in the channel, increasing the priority coefficient of the UE in the channel;

updating the adjusted transmission power of the UE in the channel according to an adjusted priority coefficient of the UE in the channel; and

re-performing the determining whether the adjusted transmission power of the UE in the channel is less than the minimum power of the UE in the channel, until the adjusted transmission power of the UE in the channel is not less than the minimum power of the UE in the channel.

The method for the communication device to increase the priority coefficient of the UE in the channel may be: based on the current value, increasing a preset value to the priority coefficient of the UE in the channel, and the preset value can be set as required, such as 0.01 and the like.

It should be noted that, by increasing the priority coefficient, the reduction range of the transmission power can be reduced, so that the transmission power of each UE in each channel can meet the transmission power that is required by the minimum power, to ensure the normal operation of each channel.

Operation 123, calculating the sum of the adjusted transmission power of each UE in each channel.

Operation 124, determining whether a difference value obtained by subtracting the sum of the adjusted transmission power of each UE in each channel from the maximum transmission power is less than 0.

Operation 125, processing the adjusted transmission power of each UE in each channel according to a determination result.

In an embodiment, if the difference value is less than 0, it means that the sum of the adjusted transmission power of each UE in each channel is greater than the maximum transmission power, and the adjusted transmission power of each UE in each channel needs a further reduction. Then, performing operation 125. If the difference value is not less than 0, it means that the sum of the adjusted transmission power of each UE in each channel is less than or equal to the maximum transmission power, which meets the requirement for sharing power. Therefore, reducing the priority coefficient of each UE in each channel if the determination result is that the difference value is less than 0, and re-performing the calculating the adjusted transmission power of each UE in each channel according to the priority coefficient of each UE in each channel and the transmission power of each UE in each channel.

The total power of a plurality of UEs on a single symbol does not exceed the maximum transmission power, and the transmission power of each UE is less than or equal to or far less than the transmission power that is calculated based on the connection between a single UE and the base station. Therefore, according to the transmission power that is calculated based on the connection between a single UE and the base station, the communication device continuously reduces the transmission power of each channel, and then the communication device can find the maximum transmission power that meets the requirements and each channel of each UE can bear.

It should be noted that, those skilled in the art can understand that the manner in which the communication device reduces the priority coefficients of each UE in each channel can be set as required. For example, when the priority coefficient of each UE in each channel is less than 1, the communication device may reduce the priority coefficient of each UE in each channel by means of proportional iteration. Specifically, the priority coefficient of each UE in each channel is less than 1. The communication device obtains a current iteration number N, and an initial value of N is 1. For the priority coefficient of each UE in each channel, taking a (N+1)-th power of the initial value of the priority coefficient of the UE in the channel as the adjusted priority coefficient of the UE in the channel, and the iteration number is increased by 1. The initial value of the priority coefficient of the UE in the channel is the value of the priority coefficient of the UE in the channel before the first iteration.

It should be noted that the priority coefficients can be reduced in a proportional iterative manner, which makes the reduction range of each priority coefficient can be determined based on the priority of each channel, and the reduced priority coefficients are more meet service requirements.

In an embodiment, if before calculating the difference value between the maximum transmission power and the sum, performing the above-mentioned determination operation of determining whether the adjusted transmission power of each UE in a certain channel is less than the minimum power value of the UE in the channel. In addition, if it is determined that the adjusted transmission power of the UE in the channel is less than the minimum power value of the UE in the channel, restoring the iteration number to the initial value. That is, if the communication device performs the operation of increasing the priority coefficient of the UE in the channel, it is considered that the communication device restarts iteration. The initial value of the UE in a certain channel mentioned above is the priority value of the UE in the channel when the adjusted transmission power of the UE in the channel is not less than the minimum power value of the UE in the channel.

It should be noted that, through proportional iteration, the communication device can gradually reduce the transmission power of each channel, so that the communication device can automatically find the maximum transmission power that meets the requirements and each channel of each UE can bear.

It should be noted that, those skilled in the art can understand that in practical applications, the transmission power of each channel can also be reduced in other ways, and this embodiment is only for illustration.

In an embodiment, if the determination result is that the difference value is not less than 0, maintaining the adjusted transmission power of each UE in each channel. That is, the adjusted transmission power of each UE in each channel is no longer adjusted.

In another embodiment, if the determination result is that the difference value is not less than 0, the communication device determines whether to further adjust the transmission power of each UE in each channel according to the relationship between the difference value and a preset value. If the communication device determines that the difference value is greater than the preset value, increasing the priority coefficient of each UE in each channel, and re-performing the calculating the adjusted transmission power of each UE in each channel according to the priority coefficient of each UE in each channel and the transmission power of each UE in each channel. The preset value is greater than 0, and may be a minimum value greater than 0. That is, the process for adjusting the transmission power includes: when each UE is individually connected to the base station for power control, the communication device calculates the transmission power of each UE in each channel. Then the transmission power of each UE in each channel is multiplied by the corresponding priority coefficient, to obtain the adjusted transmission power of each UE in each channel. For the adjusted transmission power of each UE in each channel, if the adjusted transmission power is less than the minimum power value of the channel, increasing the priority coefficient of the channel until the adjusted transmission power is not less than the minimum power value of the channel. When the adjusted transmission power of each UE in each channel meets the requirements of the minimum power value, calculating the total transmission power of each channel, and calculating the sum of the adjusted transmission power of each UE in each channel based on the total transmission power of each channel. If $0 \le$ the sum of the adjusted transmission power of each UE in each channel $\le$ the preset value (e), then ending the adjustment process. Otherwise, if the sum of the adjusted transmission power of each UE in each channel $< 0$, then re-performing the reducing the priority coefficient of each UE in each channel. If the sum of the adjusted transmission power of each UE in each channel $> e$, re-performing the increasing the priority coefficient of each UE in each channel, and recalculating the adjusted transmission power of each UE in each channel.

It should be noted that, when the difference value is greater than a preset value, increasing the priority coefficient of each UE in each channel can avoid excessive waste of channel resources.

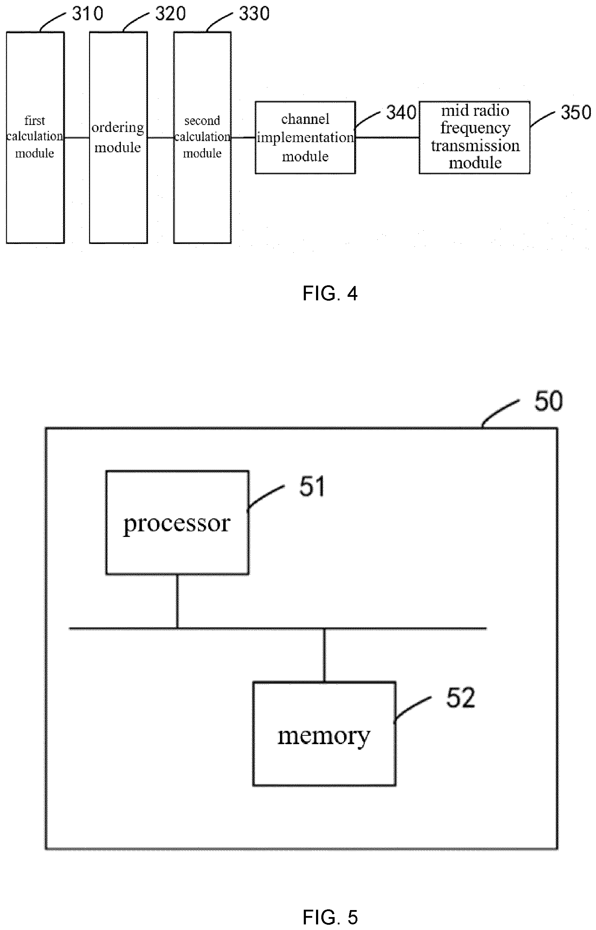

In an embodiment, a schematic diagram of a communication device is shown in FIG. 4. The communication device includes a first calculation module 310, an ordering module 320, a second calculation module 330, a channel implementation module 340 and a mid radio frequency transmission module 350. The first calculation module 310 is used to calculate the transmission power value of a plurality of UEs in different channels. That is, the first calculation module 310 is used to perform operation 110. Priorities of a plurality of UEs in different channels are stored in the ordering module 320. The second calculation module 330 is used to adjust the transmission power of a plurality of UEs in different channels, and transmit the adjusted transmission power of a plurality of UEs in different channels to each channel implementation module 340. The channel implementation module 340 is configured to allocate transmission power for different UEs according to the adjusted transmission power of a plurality of UEs in different channels, and then transmits the transmission power to the mid radio frequency transmission module 350 for mid radio frequency processing and transmission.

This embodiment provides a power allocation method. When a single device simulates a plurality of UEs, based on the transmission power of each UE in each channel when each UE is connected to the base station, adjusting the transmission power of each UE in the channel according to the priorities of each UE in each channel. In this way, not only the sum of the transmission power of a plurality of UEs does not exceed the maximum transmission power, and the transmission power allocated to each UE in each channel more meets the service requirements of each UE in each channel, but also the sum of the transmission power of the plurality of UEs does not exceed the maximum transmission power that the electronic device can bear. In addition, through proportional iteration, the communication device gradually reduces the transmission power of each channel, so that the communication device can automatically find the maximum transmission power that meets the requirements and each channel of each UE can bear, thereby improving the intelligence of the communication device.

In addition, those skilled in the art can understand that, the division of the operations in the above methods is only for clarity of description, and can be combined into one operation or split into multiple operations during implementation, as long as they include the same logical relationship.

A third embodiment of the present application relates to a communication device 50. As shown in FIG. 5, the communication device 50 includes at least one processor 51 and a memory 52 communicated with the at least one processor 51. The memory 52 stores instructions executable by the at least one processor 51, when the instructions are executed by the at least one processor 51, the at least one processor 51 can perform the power allocation method as described above.

The memory and the processor are connected by a bus. The bus may include any number of interconnected buses and bridges. The bus connects together the various circuits of one or more processors and memory. The bus may also connect together various other circuits, such as peripherals, voltage regulators, and power management circuits, which are well known in the art and therefore will not be described further herein. The bus interface provides the interface between the bus and the transceiver. A transceiver may be a single element or multiple elements, such as multiple receivers and transmitters, providing a means for communicating with various other devices over a transmission medium. The data processed by the processor is transmitted on the wireless medium through the antenna. In this embodiment, the antenna also receives the data and transmits the data to the processor.

The processor is responsible for managing the bus and general processing, and may also provide various functions including timing, peripheral interface, voltage regulation, power management, and other control functions. The memory may store data used by the processor when performing operations.

A fourth embodiment of the present application relates to a computer-readable storage medium storing a computer program. When the computer program is executed by the processor, the above method embodiment is realized.

Those skilled in the art can understand that all or part of the operations in the method of the above embodiments can be completed by instructing the relevant hardware through a program. The program is stored in a storage medium, and includes several instructions to cause a device (which may be a single-chip microcomputer, a chip, etc.) or a processor to execute all or part of the operations of the methods described in the various embodiments of the present application. The aforementioned storage medium includes: U disk, removable hard disk, read-only memory (ROM), random access memory (RAM), magnetic disk or optical disk and other media that can store program codes.

Those of ordinary skill in the art can understand that the above-mentioned embodiments are specific embodiments for realizing the present application. However, in practical application, various changes in form and details may be made therein without departing from the scope of the present application.

**Claims**

1. A power allocation method, comprising:

    (110), calculating transmission power of each user equipment in each channel when a plurality of user equipments simulated by an electronic device are respectively connected to a base station; and
    (120), adjusting the transmission power of each user equipment in each channel according to a preset priority of each user equipment in each channel, to make a sum of adjusted transmission power of each user equipment in each channel not exceed maximum transmission power of the electronic device,
    **characterized in that**, the adjusting the transmission power of each user equipment in each channel according to the preset priority of each user equipment in each channel comprises:

    (121), determining a priority coefficient corresponding to the preset priority of each user equipment in each channel;
    (122), calculating the adjusted transmission power of each user equipment in each channel according to the priority coefficient of each user equipment in each channel and the transmission power of each user equipment in each channel;
    (123), calculating the sum of the adjusted transmission power of each user equipment in each channel;
    (124), determining whether a difference value obtained by subtracting the sum from the maximum transmission power is less than 0; and
    (125), processing the adjusted transmission power of each user equipment in each channel according to a determination result.

2. The power allocation method of claim 1, wherein the processing the adjusted transmission power of each user equipment in each channel according to the determination result comprises:
    reducing the priority coefficient of each user equipment in each channel in response that the difference value is less than 0, and re-performing the calculating the adjusted transmission power of each user equipment in each channel according to the priority coefficient of each user equipment in each channel and the transmission power of each user equipment in each channel.

3. The power allocation method of claim 2, wherein in response that the difference value is not less than 0, the power allocation method further comprises:

    increasing the priority coefficient of each user equipment in each channel in response that the difference value is greater than a preset value, and re-performing the calculating the adjusted transmission power of each user equipment in each channel according to the priority coefficient of each user equipment in each channel and the transmission power of each user equipment in each channel, wherein the preset value is greater than 0; or

maintaining the adjusted transmission power of each user equipment in each channel.

4. The power allocation method of claim 1, wherein before calculating the difference value between the sum and the maximum transmission power, the power allocation method further comprises:

determining whether the adjusted transmission power of the user equipment in the channel is less than a minimum power of the user equipment in the channel;

in response that the adjusted transmission power of the user equipment in the channel is less than the minimum power of the user equipment in the channel, increasing the priority coefficient of the user equipment in the channel;

updating the adjusted transmission power of the user equipment in the channel according to an adjusted priority coefficient of the user equipment in the channel; and

re-performing the determining whether the adjusted transmission power of the user equipment in the channel is less than the minimum power of the user equipment in the channel, until the adjusted transmission power of the user equipment in the channel is not less than the minimum power of the user equipment in the channel.

5. The power allocation method of claim 2, wherein:

the priority coefficient of each user equipment in each channel is less than 1,

the reducing the priority coefficient of each user equipment in each channel comprises:

obtaining a current iteration number N, wherein an initial value of N is 1;

taking (N+1)th power of the initial value of the priority coefficient of the user equipment in the channel as the adjusted priority coefficient of the user equipment in the channel; and

increasing the iteration number by 1.

6. The power allocation method of any one of claims 1 to 5, wherein the calculating the transmission power of each user equipment in each channel when the plurality of user equipments simulated by the electronic device are respectively connected to the base station comprises:

obtaining a cell nominal power, a user equipment nominal power, a downlink path loss of the user equipment in the channel, a power offset based on a modulation and coding scheme, and a closed loop power control amount; and

calculating the transmission power of the user equipment in the channel according to the cell nominal power, the user equipment nominal power, the downlink path loss of the user equipment in the channel, the power offset based on the modulation and coding scheme, the closed loop power control amount, and an uplink power control formula of the channel.

7. The power allocation method of any one of claims 1 to 5, wherein the channels of the user equipment comprises a physical random access channel, a sounding reference signal channel, a physical uplink shared channel, and a physical uplink control channel, and a priority a of the physical random access channel, a priority b of the physical uplink shared channel, a priority c of the physical uplink control channel, and a priority d of the sounding reference signal channel meet a following condition: a>b>c>d.

8. A communication device (50), comprising:

at least one processor (51); and

a memory (52) communicated with the at least one processor (51),

**characterized in that**, the memory (52) stores instructions executable by the at least one processor (51), and the instructions are executed by the at least one processor (51), to cause the at least one processor (51) to execute the power allocation method of any one of claims 1 to 7.

9. A computer-readable storage medium, wherein a computer program is stored in the computer-readable storage medium, and **characterized in that**, when the computer program is executed by a processor (51), the power allocation method of any one of claims 1 to 7 is implemented.

**Patentansprüche**

1. Verfahren zur Leistungszuweisung, umfassend:

   (110), Berechnen der Übertragungsleistung jedes Benutzergeräts in jedem Kanal, wenn eine Vielzahl von durch eine elektronische Vorrichtung simulierten Benutzergeräten jeweils mit einer Basisstation verbunden sind; und
   (120), Anpassen der Übertragungsleistung jedes Benutzergeräts in jedem Kanal gemäß einer vorgegebenen Priorität jedes Benutzergeräts in jedem Kanal, um die Summe der angepassten Übertragungsleistung jedes Benutzergeräts in jedem Kanal nicht die maximale Übertragungsleistung der elektronischen Vorrichtung überschreiten zu lassen,
   **dadurch gekennzeichnet, dass** das Anpassen der Übertragungsleistung jedes Benutzergeräts in jedem Kanal gemäß der voreingestellten Priorität jedes Benutzergeräts in jedem Kanal Folgendes umfasst:

   (121), Bestimmen eines Prioritätskoeffizienten, der der voreingestellten Priorität jedes Benutzergeräts in jedem Kanal entspricht;
   (122), Berechnen der angepassten Übertragungsleistung jedes Benutzergeräts in jedem Kanal gemäß dem Prioritätskoeffizienten jedes Benutzergeräts in jedem Kanal und der Übertragungsleistung jedes Benutzergeräts in jedem Kanal;
   (123), Berechnen der Summe der angepassten Übertragungsleistung jedes Benutzergeräts in jedem Kanal;
   (124), Bestimmen, ob ein Differenzwert, der durch Subtrahieren der Summe von der maximalen Übertragungsleistung erhalten wird, kleiner als 0 ist; und
   (125), Verarbeiten der angepassten Übertragungsleistung jedes Benutzergeräts in jedem Kanal gemäß einem Bestimmungsergebnis wird.

2. Verfahren zur Leistungszuweisung nach Anspruch 1, wobei das Verarbeiten der angepassten Übertragungsleistung jedes Benutzergeräts in jedem Kanal gemäß dem Bestimmungsergebnis umfasst:
   Reduzieren der Prioritätskoeffizienten jedes Benutzergeräts in jedem Kanal, wenn der Differenzwert kleiner als 0 ist, und und erneut Durchführen der Berechnung der angepassten Übertragungsleistung jedes Benutzergeräts in jedem Kanal gemäß den Prioritätskoeffizienten jedes Benutzergeräts in jedem Kanal und der Übertragungsleistung jedes Benutzergeräts in jedem Kanal.

3. Verfahren zur Leistungszuweisung nach Anspruch 2, wobei, wenn der Differenzwert nicht kleiner als 0 ist, das Verfahren zur Leistungszuweisung zusätzlich umfasst:

   Erhöhen der Prioritätskoeffizienten jedes Benutzergeräts in jedem Kanal, wenn der Differenzwert größer als ein voreingestellter Wert ist, und erneut Durchführen der Berechnung der angepassten Übertragungsleistung jedes Benutzergeräts in jedem Kanal gemäß den Prioritätskoeffizienten jedes Benutzergeräts in jedem Kanal und der Übertragungsleistung jedes Benutzergeräts in jedem Kanal, wobei der voreingestellte Wert größer als 0 ist; oder
   Beibehalten der angepassten Übertragungsleistung jedes Benutzergeräts in jedem Kanal .

4. Verfahren zur Leistungszuweisung nach Anspruch 1, wobei das Verfahren zur Leistungszuweisung vor der Berechnung des Differenzwerts zwischen der Summe und der maximalen Übertragungsleistung zusätzlich umfasst:

   Bestimmen, ob die angepasste Übertragungsleistung des Benutzergeräts im Kanal kleiner als eine Mindestleistung des Benutzergeräts im Kanal ist;
   Erhöhen der Prioritätskoeffizienten des Benutzergeräts im Kanal zu, wenn die angepasste Übertragungsleistung des Benutzergeräts im Kanal kleiner als die Mindestleistung des Benutzergeräts im Kanal ist;
   Aktualisieren der angepassten Übertragungsleistung des Benutzergeräts im Kanal gemäß einem angepassten Prioritätskoeffizienten des Benutzergeräts im Kanal; und
   erneut Durchzuführen der Bestimmung, ob die angepasste Übertragungsleistung des Benutzergeräts im Kanal kleiner als die Mindestleistung des Benutzergeräts im Kanal ist, bis die angepasste Übertragungsleistung des Benutzergeräts im Kanal nicht kleiner als die Mindestleistung des Benutzergeräts im Kanal ist.

5. Verfahren zur Leistungszuweisung nach Anspruch 2, wobei:

   die Prioritätskoeffizienten jedes Benutzergeräts in jedem Kanal kleiner als 1 sind,
   das Reduzieren der Prioritätskoeffizienten jedes Benutzergeräts in jedem Kanal umfasst:

Erhalten einer aktuellen Iterationsnummer N, wobei ein Anfangswert von N gleich 1 ist;
Nehmen der (N+1)-te Potenz des Anfangswerts des Prioritätskoeffizienten des Benutzergeräts im Kanal als den angepassten Prioritätskoeffizienten des Benutzergeräts im Kanal; und
Erhöhen der Iterationsnummer um 1.

6. Verfahren zur Leistungszuweisung nach einem der Ansprüche 1 bis 5, wobei das Berechnen der Übertragungsleistung jedes Benutzergeräts in jedem Kanal, wenn die Vielzahl von Benutzergeräten, die durch die elektronische Vorrichtung simuliert werden, jeweils mit der Basisstation verbunden sind, umfasst:

Erfassen einer Zellennennleistung, einer Benutzergerätnennleistung, eines Downlink-Pfadverlusts des Benutzergeräts im Kanal, eines Leistungsversatzes basierend auf einem Modulations- und Kodierungsschema und einer geschlossenen Leistungsregelungsmenge; und
Berechnen der Übertragungsleistung des Benutzergeräts im Kanal gemäß der Zellennennleistung, der Benutzergerätnennleistung, dem Downlink-Pfadverlust des Benutzergeräts im Kanal, dem Leistungsversatz basierend auf dem Modulations- und Kodierungsschema, der geschlossenen Leistungsregelungsmenge und einer Uplink-Leistungsregelungsformel des Kanals.

7. Verfahren zur Leistungszuweisung nach einem der Ansprüche 1 bis 5, wobei die Kanäle des Benutzergeräts einen physikalischen Random-Access-Kanal, einen Sounding-Referenzsignal-Kanal, einen physikalischen Uplink-Shared-Kanal und einen physikalischen Uplink-Control-Kanal umfassen, und eine Priorität a des physikalischen Random-Access-Kanals, eine Priorität b des physikalischen Uplink-Shared-Kanals, eine Priorität c des physikalischen Uplink-Control-Kanals und eine Priorität d des Sounding-Referenzsignal-Kanals folgende Bedingung erfüllen: a>b>c>d.

8. Kommunikationsvorrichtung (50), umfassend:

mindestens einen Prozessor (51); und
einen Speicher (52), der mit dem mindestens einen Prozessor (51) verbunden ist,
**dadurch gekennzeichnet, dass** der Speicher (52) Anweisungen speichert, die von dem mindestens einen Prozessor (51) ausführbar sind, und die Anweisungen von dem mindestens einen Prozessor (51) ausgeführt werden, um den mindestens einen Prozessor (51) zu veranlassen, das Verfahren zur Leistungszuweisung nach einem der Ansprüche 1 bis 7 auszuführen.

9. Computerlesbares Speichermedium, wobei ein Computerprogramm im computerlesbaren Speichermedium gespeichert ist, **dadurch gekennzeichnet, dass**, wenn das Computerprogramm von einem Prozessor (51) ausgeführt wird, das Verfahren zur Leistungszuweisung nach einem der Ansprüche 1 bis 7 implementiert wird.

## Revendications

1. Procédé d'allocation de puissance, comprenant :

(110), calculer une puissance d'émission de chaque équipement utilisateur dans chaque canal lorsqu'une pluralité d'équipements utilisateurs simulés par un dispositif électronique sont respectivement connectés à une station de base ; et
(120), ajuster la puissance d'émission de chaque équipement utilisateur dans chaque canal en fonction d'une priorité prédéfinie de chaque équipement utilisateur dans chaque canal, de sorte qu'une somme de puissance d'émission ajustée de chaque équipement utilisateur dans chaque canal ne dépasse pas une puissance d'émission maximale du dispositif électronique, **caractérisé en ce que** l'ajustement de la puissance d'émission de chaque équipement utilisateur dans chaque canal en fonction de la priorité prédéfinie de chaque équipement utilisateur dans chaque canal comprend :

(121), déterminer un coefficient de priorité correspondant à la priorité prédéfinie de chaque équipement utilisateur dans chaque canal ;
(122), calculer la puissance d'émission ajustée de chaque équipement utilisateur dans chaque canal en fonction du coefficient de priorité de chaque équipement utilisateur dans chaque canal et de la puissance d'émission de chaque équipement utilisateur dans chaque canal ;
(123), calculer la somme de puissance d'émission ajustée de chaque équipement utilisateur dans chaque canal ;

(124), déterminer si une valeur de différence obtenue en soustrayant la somme de la puissance d'émission maximale est inférieure à 0 ; et

(125), traiter la puissance d'émission ajustée de chaque équipement utilisateur dans chaque canal en fonction d'un résultat de détermination.

2. Procédé d'allocation de puissance selon la revendication 1, dans lequel le traitement de la puissance d'émission ajustée de chaque équipement utilisateur dans chaque canal en fonction du résultat de détermination comprend : réduire le coefficient de priorité de chaque équipement utilisateur dans chaque canal en réponse au fait que la valeur de différence est inférieure à 0, et recalculer la puissance d'émission ajustée de chaque équipement utilisateur dans chaque canal en fonction du coefficient de priorité de chaque équipement utilisateur dans chaque canal et de la puissance d'émission de chaque équipement utilisateur dans chaque canal.

3. Procédé d'allocation de puissance selon la revendication 2, dans lequel en réponse au fait que la valeur de différence n'est pas inférieure à 0, le procédé d'allocation de puissance comprend en outre :

élever le coefficient de priorité de chaque équipement utilisateur dans chaque canal en réponse au fait que la valeur de différence est supérieure à une valeur prédéfinie, et recalculer la puissance d'émission ajustée de chaque équipement utilisateur dans chaque canal en fonction du coefficient de priorité de chaque équipement utilisateur dans chaque canal et de la puissance d'émission de chaque équipement utilisateur dans chaque canal, dans lequel la valeur prédéfinie est supérieure à 0 ; ou
maintenir la puissance d'émission ajustée de chaque équipement utilisateur dans chaque canal.

4. Procédé d'allocation de puissance selon la revendication 1, dans lequel, avant de calculer la valeur de différence entre la somme et la puissance d'émission maximale, le procédé d'allocation de puissance comprend en outre :

déterminer si la puissance d'émission ajustée de l'équipement utilisateur dans le canal est inférieure à une puissance minimale de l'équipement utilisateur dans le canal ;
en réponse au fait que la puissance d'émission ajustée de l'équipement utilisateur dans le canal est inférieure à la puissance minimale de l'équipement utilisateur dans le canal, élever le coefficient de priorité de chaque équipement utilisateur dans chaque canal ;
mettre à jour la puissance d'émission ajustée de l'équipement utilisateur dans le canal en fonction d'un coefficient de priorité ajusté de l'équipement utilisateur dans le canal ; et
re-déterminer si la puissance d'émission ajustée de l'équipement utilisateur dans le canal est inférieure à la puissance minimale de l'équipement utilisateur dans le canal, jusqu'à ce que la puissance d'émission ajustée de l'équipement utilisateur dans le canal ne soit pas inférieure à la puissance minimale de l'équipement utilisateur dans le canal.

5. Procédé d'allocation de puissance selon la revendication 2, dans lequel :

le coefficient de priorité de chaque équipement utilisateur dans chaque canal est inférieur à 1,
la réduction du coefficient de priorité de chaque équipement utilisateur dans chaque canal comprend :

obtenir un nombre d'itération actuel N, dans lequel une valeur initiale de N est de 1 ;
prendre la (N+1)-ème puissance de la valeur initiale du coefficient de priorité de l'équipement utilisateur dans le canal comme coefficient de priorité ajusté de l'équipement utilisateur dans le canal ; et
élever le nombre d'itérations de 1.

6. Procédé d'allocation de puissance selon l'une quelconque des revendications 1 à 5, dans lequel le calcul de la puissance d'émission de chaque équipement utilisateur dans chaque canal lorsque la pluralité d'équipements utilisateurs simulés par le dispositif électronique sont respectivement connectés à la station de base comprend :

obtenir une puissance nominale de cellule, une puissance nominale d'équipement utilisateur, une perte de chemin de liaison descendante de l'équipement utilisateur dans le canal, un décalage de puissance basé sur un schéma de modulation et d'encodage, et une quantité de commande de puissance en boucle fermée ; et
calculer la puissance d'émission de l'équipement utilisateur dans le canal en fonction de la puissance nominale de cellule, de la puissance nominale d'équipement utilisateur, de la perte de chemin de liaison descendante de l'équipement utilisateur dans le canal, du décalage de puissance basé sur le schéma de modulation et d'encodage, de la quantité de commande de puissance en boucle fermée et d'une formule de commande de puissance de liaison montante du canal.

7. Procédé d'attribution de puissance selon l'une quelconque des revendications 1 à 5, dans lequel les canaux de l'équipement utilisateur comprennent un canal d'accès aléatoire physique, un canal de signal de référence de sondage, un canal partagé de liaison montante physique et un canal de commande de liaison montante physique, et une priorité a du canal d'accès aléatoire physique, une priorité b du canal partagé de liaison montante physique, une priorité c du canal de commande de liaison montante physique et une priorité d du canal du signal de référence de sondage satisfont à la condition suivante : a>b>c>d.

8. Dispositif de communication (50), comprenant :

au moins un processeur (51) ; et
une mémoire (52) en communication avec au moins un processeur (51),
**caractérisée en ce que** la mémoire (52) stocke des instructions exécutables par l'au moins un processeur (51), et les instructions sont exécutées par l'au moins un processeur (51), de sorte que l'au moins un processeur (51) mette en œuvre le procédé d'allocation de puissance selon l'une quelconque des revendications 1 à 7.

9. Support de stockage lisible par ordinateur, dans lequel un programme informatique est stocké sur le support de stockage lisible par ordinateur, et **caractérisée en ce que**, lorsque le programme informatique est exécuté par un processeur (51), le procédé d'allocation de puissance selon l'une quelconque des revendications 1 à 7 est mise en œuvre.

start

110

calculating transmission power of each user equipment (UE) in each channel when a plurality of UEs simulated by an electronic device are respectively connected to a base station

adjusting the transmission power of each UE in each channel according to a preset priority of each UE in each channel, to make a sum of adjusted transmission power of each UE in each channel not exceed maximum transmission power of the electronic device

120

end

FIG. 1

electronic device — 210

base station — 230

UE — 220 · · · · · · UE — 220 UE — 220 UE — 220

FIG. 2

determining a priority coefficient corresponding to the preset priority of each UE in each channel — 121

calculating the adjusted transmission power of each UE in each channel according to the priority coefficient of each UE in each channel and the transmission power of each UE in each channel — 122

calculating the sum of the adjusted transmission power of each UE in each channel — 123

determining whether a difference value obtained by subtracting the sum of the adjusted transmission power of each UE in each channel from the maximum transmission power is less than 0 — 124

processing the adjusted transmission power of each UE in each channel according to a determination result — 125

FIG. 3

FIG. 4

FIG. 5

**EP 4 164 303 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108541059 A
- US 10117193 B2